Europäisches Patentamt

European Patent Office

Office européen des brevets

(19)

(11) Veröffentlichungsnummer: **0 393 014**
**A2**

## (12) EUROPÄISCHE PATENTANMELDUNG

(21) Anmeldenummer: **90890099.6**

(22) Anmeldetag: **04.04.90**

(51) Int. Cl.⁵: **B01D 53/18**

(30) Priorität: **11.04.89 AT 846/89**

(43) Veröffentlichungstag der Anmeldung:
**17.10.90 Patentblatt 90/42**

(84) Benannte Vertragsstaaten:
**AT BE CH DE DK ES FR GB GR IT LI LU NL SE**

(71) Anmelder: **Schmid, Peter J., Ing.**
**Neustiftgasse 93**
**A-1070 Wien(JP)**

(72) Erfinder: **Schmid, Peter J., Ing.**
**Neustiftgasse 93**
**A-1070 Wien(JP)**

(74) Vertreter: **Kliment, Peter, Dipl.-Ing. Mag.-jur.**
**Singerstrasse 8/3/8**
**A-1010 Wien(AT)**

(54) **Einrichtung zur Behandlung von Gasen.**

(57) Einrichtung zur Behandlung von Gasen, insbesondere von Rauchgasen, die einen im wesentlichen vertikal verlaufenden hohlen Mantel aufweist, in dem verschiedene Einbauten, wie Böden, Kolonnentrenner, Wäscher u.dgl. gehalten sind. Um auch bei Anlagen für große zu behandelnde Gasmengen eine gleichmäßige Durchströmung der Einrichtung über deren gesamten Querschnitt sicherzustellen, ist vorgesehen, daß der Mantel (1) durch mindestens zwei, einander kreuzende Trennwände (2) unterteilt ist, wobei an den Trennwänden (2) und den Innenwänden des Mantels (1) Halterungen (3) für das Auflegen der verschiedenen Einbauten (16 bis 21), insbesondere von Böden (16), Kolonnentrennern (18) Demistoren (17), Sprüheinrichtungen (18) u.dgl. angeordnet und an dem Mantel (1) Anschlüsse, bzw. Durchführungen (22) für Leitungen vorgesehen sind und daß Leiteinrichtungen (15) zur Aufteilung des Gasstromes auf die Unterteilungen des Querschnittes des Mantels (1) vorgesehen sind.

**Fig. 1**

EP 0 393 014 A2

Die Erfindung bezieht sich auf eine Einrichtung zur Behandlung von Gasen, insbesondere von Rauchgasen, die einen im wesentlichen vertikal verlaufenden hohlen Mantel aufweist, in dem verschiedene Einbauten, insbesondere Böden, Kolonnentrenner oder Wäscher gehalten sind.

Bei bekannten derartigen Einrichtung ist ein für die gesamte zu behandelnde Gasmenge dimensionierter Mantel vorgesehen, in dem sich über den gesamten lichten Querschnitt erstreckende Einbauten angeordnet sind.

Dabei ergibt sich jedoch der Nachteil, daß sich meist sehr große Querschnitte ergeben, was zu entsprechenden Problemen bei der Dimensionierung und Konstruktion der Einbauten führt. Außerdem ergibt sich bei großen Querschnitten, wie sie bei den bekannten Einrichtungen der eingangs erwähnten Art vorgesehen sind, auch meist eine über den Querschnitt variierende Durchströmung der Einbauten, wodurch deren Wirkungsgrad entsprechend absinkt. Diese Schwierigkeiten machen auch eine sehr aufwendige und langwierige Planung solcher Einrichtungen erforderlich, zu der meist auch aufwendige Modellversuche notwendig sind. Dies führt aber wieder zu entsprechend langen Errichtungszeiten solcher Einrichtungen, die besonders in Zeiten mit rasch schärfer werdenden Umweltschutzbestimmungen einen gravierenden Nachteil darstellen.

Ziel der Erfindung ist es diese Nachteile zu vermeiden und eine Einrichtung der eingangs erwähnten Art vorzuschlagen, bei denen einerseits eine weitgehend gleichmäßige Durchströmung über den gesamten Querschnitt der Einbauten sichergestellt ist und bei der mit relativ einfachen Stützkonstruktionen für die Einbauten das Auslangen gefunden wird.

Erfindungsgemäß wird dies dadurch erreicht, daß der Mantel durch mindestens zwei, einander kreuzende Trennwände unterteilt ist, wobei an den Trennwänden und den Innenwänden des Mantels Halterungen für das Auflegen der verschiedenen Einbauten, insbesondere von Böden, Kolonnentrennern Demistoren oder Sprüheinrichtungen angeordnet und an dem Mantel Anschlüsse, bzw. Durchführungen für Leitungen vorgesehen sind und daß Leiteinrichtungen zur Aufteilung des Gasstromes auf die Unterteilungen des Querschnittes des Mantels vorgesehen sind.

Auf diese Weise ergeben sich entsprechend kleine Querschnitte und einfache Halterungen für die Einbauten, die daher im Hinblick auf deren Statik wesentlich schwächer dimensioniert werden können, als dies nach den bisherigen Lösungen für gleiche Gasdurchsätze möglich wäre. Außerdem ergibt sich dadurch auch eine gleichmäßigere Verteilung des zu behandelnden Gasstromes über den gesamten Querschnitt des Mantels.

Nach einem weiteren Merkmal der Erfindung kann vorgesehen sein, daß an der Außenseite des Mantels Halterungen für die Montage von Hilfsaggregaten, wie Pumpen oder Sammler angeordnet sind.

Durch diese Maßnahmen ist es möglich den einzelnen naß arbeitenden Einbauten, wie Wäscher, Kolonnentrennern u.dgl. einen Sammler nachzuschalten und diesen gegenüber den entsprechenden Einbauten nur wenig tiefer anzuordnen. Auf diese Weise kann bei Kreisläufen mit kleineren Pumpenleistungen das Auslangen gefunden werden, da sich für die Pumpen dann nur entsprechend geringe Förderhöhen ergeben.

Ein weiteres Ziel der Erfindung ist es, eine Anordnung mit erfindungsgemäßen Einrichtungen vorzuschlagen, die sich leicht an den jweils zu behandelnden Gasstrom anpassen läßt, ohne, daß dazu eine aufwendige Planung erforderlich wäre.

Erfindungsgemäß wird dies dadurch erreicht, daß in verschiedenen festgelegten Größen vorgefertigte Mäntel in einem gegenseitigen Abstand voneinander aufgestellt und mit dem jeweiligen Bedarf entsprechenden Einbauten bestückt sind, wobei für jeden der parallel angespeisten Mäntel eine getrennte, gegebenenfalls regelbare Zufuhr für das zu behandelnde Gas vorgesehen ist.

Dies ermöglicht es auch Mäntel samt Halterungen für die verschiedenen Einbauten als Module vorzufertigen, wobei dann für die verschiedenen Anlagen lediglich die für die Behandlung des anfallenden Gasstromes nötige Anzahl von Mäntel nebeneinander angeordnet zu werden braucht.

Dabei ergibt sich überdies der Vorteil, daß bei Teillastbetrieb auch die Einrichtung zur Behandlung des anfallenden Gasstromes dem jeweiligen Anfall entsprechend angepaßt werden kann, sodaß der in Betrieb verbleibende Teil der Einrichtung zur Behandlung des Gasstromes im Bereich um 100%, z.B. im Bereich von 80 bis 120%, seiner Kapazität betrieben werden kann, wodurch optimale Verhältnisse auch bei Teillastbetrieb gegeben sind. Auf die gesamte Einrichtung übertragen, kann daher bei sehr geringen Teillasten noch mit sehr gutem Wirkungsgrad gearbeitet werden.

Weiters kann vorgesehen sein, daß jeder Mantel aus mehreren übereinander angeordneten und miteinander verbunden Teilen gebildet ist, wodurch die Herstellung von vorgefertigten Modulen erleichtert wird. Überdies ist dadurch auch eine Anpassung an die jeweiligen Erfordernisse, insbesondere an die jeweils erforderliche Anzahl an Behandlungsstufen für den Gasstrom möglich.

Ein weiteres Ziel der Erfindung ist es eine Anordnung mit erfindungsgemäßen Einrichtungen zur Behandlung größerer Gasmengen vorzuschlagen, die sich sehr leicht an die jeweils zu behandelnde Gasmenge anpassen läßt.

Erfindungsgemäß wird daher vorgeschlagen, daß in verschiedenen festgelegten Größen vorgefertigte Mäntel in einem gegenseitigen Abstand voneinander aufgestellt und mit dem jeweiligen Bedarf entsprechenden Einbauten bestückt sind, wobei für jeden der parallel angespeisten Mäntel eine getrennte, gegebenenfalls regelbare Zufuhr für das zu behandelnde Gas vorgesehen ist.

Dies ermöglicht es je nach der zu behandelnde Gasmenge eine Anzahl von erfindungsgemaßen, für relativ kleine Gasmengen ausgelegte Einrichtungen aufzustellen, wodurch sich ein entsprechend geringer Planungsaufwand ergibt. Dabei wird durch die Aufstellung der Einrichtungen in einem gegenseitigen Abstand eine gegenseitige Beeinflussung, insbesondere eine thermische Kopplung vermiden. Außerdem kann eine auf diese Weise aufgebaute Anordnung auch mit sehr kleinen Teillasten wirkungsvoll betrieben werden, da in diesem Falle eine entsprechende Anzahl von Einrichtungen abgeschaltet werden, bzw. von einer Beaufschlagung ausgeschlossen werden kann.

Die Erfindung wird nun anhand der Zeichnung näher erlautert. Dabei zeigt:

Fig. 1 schematisch eine Draufsicht auf eine Anordnung mit erfindungsgemäßen Einrichtungen.

Fig. 2 einen Vertikalschnitt durch eine Anordnung mit erfindungsgemäßen Einrichtungen.

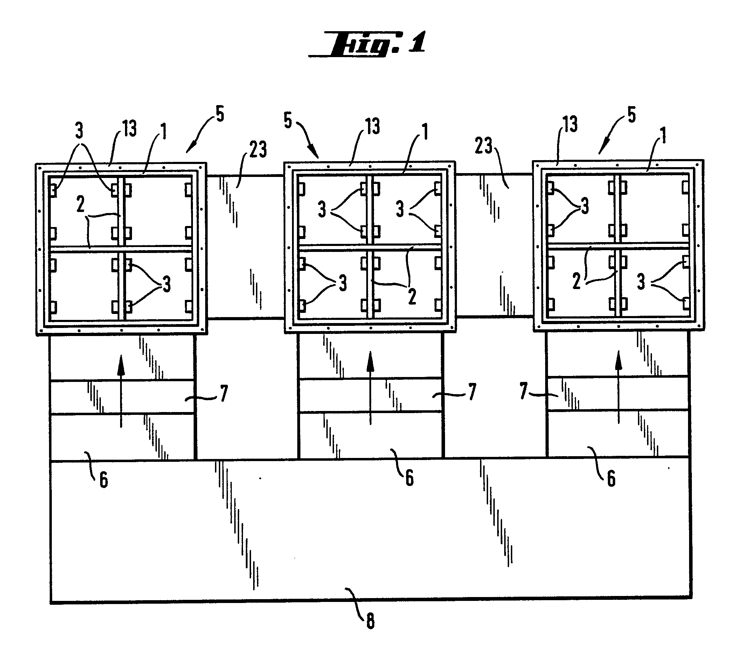

Wie schematisch in der Fig. 1 dargestellt, besteht jede der Einrichtungen aus einem Mantel 1 mit im wesentlichen quadratischen Querschnitt. Dieser Mantel 1 ist durch zwei einander kreuzende Trennwände 2 unterteilt. An diesen, wie auch an den Innenseiten des Mantles 1 sind Halterungen 3 befestigt, die zur Aufnahme, bzw. Unterstützung der verschiedensten Einbauten, wie Böden, Demistoren, Kolonnentrenner, Sprüheinrichtungen u.dgl. vorgesehen sind.

Bei der in der Fig. 1 dargestellten Anordnung sind mehrere solcher Einrichtungen 5 über entsprechende Zuleitungen 6, in denen auch vorzugsweise getrennt steuerbare Ventilatoren 7 angeordnet sind mit einem Sammler 8 verbunden.

Wie aus der Fig. 1 ersichtlich, ergeben sich durch die Unterteilung des lichten Querschnittes des Mantels 1 relativ kleine Abmessungen für die einzelnen Einbauten, sodaß diese im Hinblick auf deren mechanische Belastung im Betrieb nur relativ gering beansprucht werden und daher entsprechend schwach dimensioniert werden können.

Durch die Aufteilung des Querschnittes kommt es auch zu einer gleichmäßigeren Durchströmung der Einbauten durch den zu behandelnden Gasstrom.

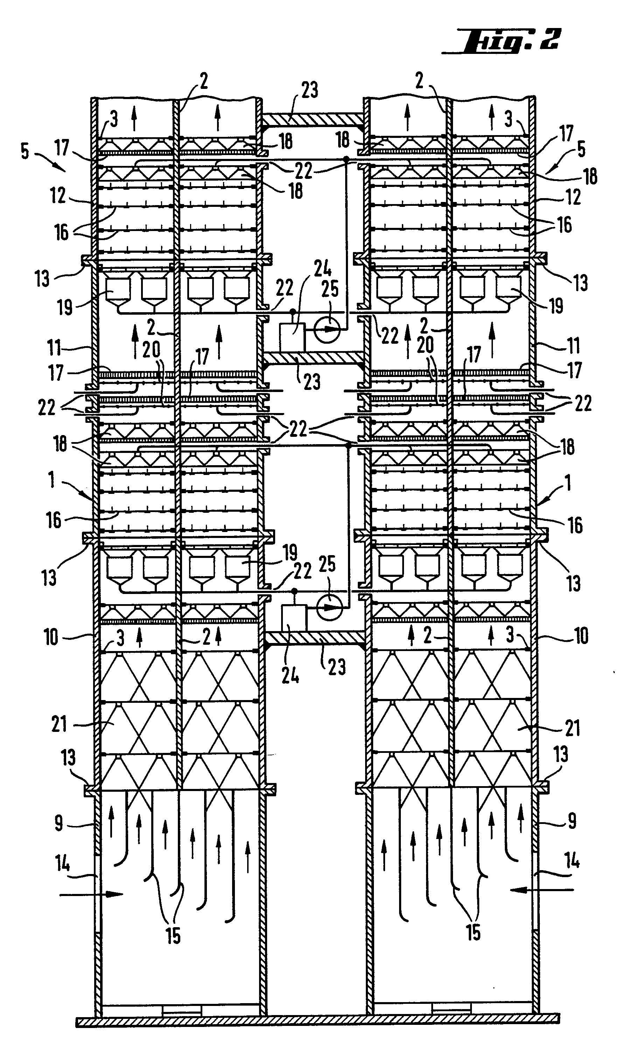

In der Fig. 2 ist schematisch ein Vertikalschnitt durch eine Anordnung mit erfindungsgemäßen Einrichtungen 5 dargestellt.

Dabei bestehen die Mäntel 1 der Einrichtungen 5 aus mehreren übereinander angeordneten und miteinander verbundenen Teilen 9 bis 12, die an ihren einander zugekehrten Enden Flansche 13 aufweisen.

Dabei sind im untersten Teil 9 des Mantels 1, welcher Teil auch die Zuführöffnung 14 für die zu behandelnde Gase, insbesondere Rauchgase aufweist, Leitbleche 15 angeordnet, die für eine gleichmäßige Aufteilung der einströmenden Gase auf die vier durch die Trennwände 2 unterteilten Abschnitte des lichten Querschnittes des Mantels 1 sorgen.

In den Teilen 10, 11 und 12 des Mantels 1 sind, wie bereits anhand der Fig. 1 erläutert wurde, an den Trennwänden 2 und der Innenseite des Mantels 1 Halterungen angeordnet, auf denen die verschiedenen Einbauten, wie Böden 16, Demistoren 17, Sprüheinrichtungen 18, Kolonnentrenner 19, Verteilein richtungen 20, z.B. für die Einbringung von Sauerstoff oder Ozon, bzw. einem Gemisch solcher Gase für eine Entstickungseinrichtung zur Entfernung von Stickoxiden aus Rauchgasen, oder Staubfänger 21 abgestützt, oder an diesen befestigt sind.

Weiters sind im Mantel 1 bzw. dessen Teile 9 bis 12 Durchlässe 22 für verschiedene Leitungen angeordnet, die eine dichte Durchführung dieser Leitungen durch den Mantel ermöglichen.

Die Einrichtungen 5 sind in einem gegenseitigen Abstand voneinander angeordnet, jedoch miteinander über Bühnen 23 verbunden. An diesen sind Sammler 24 gehalten, die einerseits mit Sammelleitungen von Kolonnentrennern 18 und mit der Saugseite von Pumpen 25 verbunden sind, die zur Aufrechterhaltung von Kreisläufen, z.B. von Kalkmilch zur Entschwefelung oder von Ammoniak zur Ausbringung von Nitraten aus einer Entstickungseinrichtung vorgesehen sind.

Die Mäntel 1 und auch die Einbauten können in verschiedenen festgelegten Größen für verschiedene Anlagen vorgefertigt werden. Je nach der zu behandelnden Gasmenge kann dann eine entsprechende Anzahl erfindungsgemäßer Einrichtungen 5 aufgestellt und parallel mit dem zu behandelnden Gas beaufschlagt werden.

Für die Mäntel 1 haben sich Größen von 2m x 2m, 2,5m x 2,5m, oder 3m x 3m im Querschnitt als günstig erwiesen. Dabei ergeben sich pro Unterteilung relativ kleine Querschnittsflächen. Bei solchen kleinen Querschnittsflächen lassen sich die ablaufenden Reaktion und die Durchströmung der Einbauten mit dem zu behandelnden Gas relativ leicht vorbestimmen. Damit erübrigen sich aber die bei großen Querschnitten von z.B. 10m x 10m meist erforderlichen Modellversuche, die in ihrer Aussagekraft nicht immer zufriedenstellend sind.

Durch die erfindungsgemäßen Maßnahmen ist es auf einfache Weise möglich auch Anlagen für die Behandlung sehr großer Gasmengen mit geringstem Planungsaufwand zu errichten, da einfach eine entsprechende Anzahl von unterteilten Mäntel aufgestellt zu werden braucht. Außerdem ist es dadurch auch möglich die Einrichtung zur Behandlung des Gasstromes an den Anfall des zu behandelnden Gases anzupassen, da eben die Zufuhr des Gases zu den einzelnen mit den entsprechenden Einbauten versehenen Mäntel unterbrochen oder freigegeben werden kann. Dabei kann weiters auch vorgesehen sein, entsprechende Steuereinrichtungen in getrennten Zuleitungen zu jedem Teilquerschnitt der einzelnen Mäntel vorzusehen, wodurch erreicht werden kann, daß die vom Gasstrom beaufschlagten Teilquerschnitte der Mäntel praktisch mit ihrer Nennbelastung betrieben werden.

## Ansprüche

1. Einrichtung zur Behandlung von Gasen, insbesondere von Rauchgasen, die einen im wesentlichen vertikal verlaufenden hohlen Mantel aufweist, in dem verschiedene Einbauten, insbesondere Böden, Kolonnentrenner oder Wäscher gehalten sind, **dadurch gekennzeichnet**, daß der Mantel (1) durch mindestens zwei, einander kreuzende Trennwände (2) unterteilt ist, wobei an den Trennwänden (2) und den Innenwänden des Mantels (1) Halterungen (3) für das Auflegen der verschiedenen Einbauten (16 bis 21), insbesondere von Böden (16), Kolonnentrennern (18) Demistoren (17) oder Sprüheinrichtungen (18) angeordnet und an dem Mantel (1) Anschlüsse, bzw. Durchführungen (22) für Leitungen vorgesehen sind und daß Leiteinrichtungen (15) zur Aufteilung des Gasstromes auf die Unterteilungen des Querschnittes des Mantels (1) vorgesehen sind.

2. Einrichtung nach Anspruch 1, **dadurch gekennzeichnet**, daß an der Außenseite des Mantels Halterungen (23) für die Montage von Hilfsaggregaten, wie Pumpen (25) oder Sammler (24) angeordnet sind.

3. Einrichtung nach Anspruch 1 oder 2, **dadurch gekennzeichnet**, daß der Mantel (1) aus mehreren übereinander angeordneten und miteinander verbunden Teilen (9 bis 12) gebildet ist.

4. Anordnung mit Einrichtungen nach einem der Ansprüche 1 bis 3, **dadurch gekennzeichnet**, daß in verschiedenen festgelegten Größen vorgefertigte Mäntel (1) in einem gegen seitigen Abstand voneinander aufgestellt und mit dem jeweiligen Bedarf entsprechenden Einbauten bestückt sind, wobei für jeden der parallel angespeisten Mäntel (1) eine getrennte, gegebenenfalls regelbare Zufuhr für das zu behandelnde Gas vorgesehen ist.

## Fig. 1

Fig. 2